# EUROPÄISCHE PATENTSCHRIFT

(11) **EP 3 213 171 B1**
(45) Veröffentlichungstag und Bekanntmachung des Hinweises auf die Patenterteilung: **21.08.2019**
(21) Anmeldenummer: 15797272.0
(22) Anmeldetag: 06.11.2015
(51) Int. Cl.: G06F 3/01, B60K 37/00, G06F 3/023, G06F 3/0481, G09B 21/00, G06F 3/0488, G06F 3/0484

(54) **BENUTZERSCHNITTSTELLE UND VERFAHREN ZUR BEDIENUNG EINES SYSTEMS**
USER INTERFACE AND METHOD FOR OPERATING A SYSTEM
INTERFACE UTILISATEUR ET PROCÉDÉ DE COMMANDE D'UN SYSTÈME

(30) Priorität: 02.12.2014 DE 102014224674
(43) Veröffentlichungstag der Anmeldung: 06.09.2017
(73) Patentinhaber: AEVI International GmbH, 33106 Paderborn (DE)
(72) Erfinder: NOLTE, Michael, 33034 Brakel (DE); GÖRLICH, Jürgen, 33428 Marienfeld (DE); LINDEMANN, Matthias, 33098 Paderborn (DE); WEGGE, Klaus-Peter, 33100 Paderborn (DE)
(86) Internationale Anmeldenummer: PCT/EP2015/075886
(87) Internationale Veröffentlichungsnummer: WO 2016/087156

(56) Entgegenhaltungen:
- EP-A2- 2 717 150
- WO-A2-02/19081
- US-A1- 2010 073 329
- GUERREIRO T ET AL: "From Tapping to Touching: Making Touch Screens Accessible to Blind Users", IEEE MULTIMEDIA, IEEE SERVICE CENTER, NEW YORK, NY, US, Bd. 15, Nr. 4, 1. Oktober 2008 (2008-10-01), Seiten 48-50, XP011241251, ISSN: 1070-986X, DOI: 10.1109/MMUL.2008.88
- JOÃO OLIVEIRA ET AL: "Blind people and mobile touch-based text-entry: Acknowledging the Need for different flavours", COMPUTERS AND ACCESSIBILITY, ACM, 2 PENN PLAZA, SUITE 701 NEW YORK NY 10121-0701 USA, 24. Oktober 2011 (2011-10-24), Seiten 179-186, XP058005591, DOI: 10.1145/2049536.2049569 ISBN: 978-1-4503-0920-2

## Beschreibung

Mit der Umstellung von mechanischen Tastaturen auf eine berührungsbasierte Bedienung mittels Tastfeldern, Tastschirmen oder Multi-Touch-Bildschirmen entsteht das Problem, dass die Tastatur, ihr Layout und die einzelnen Tasten sowie deren Druckpunkte nicht mehr fühlbar sind. Hierdurch werden Eingaben durch sehbehinderte oder blinde Personen besonders erschwert, da lernbare taktile Orientierungspunkte auf einem flachen Tastfeld oder Tastschirm nicht mehr vorhanden sind.

Unter dem Begriff Tastschirm werden im Folgenden auch Multi-Touch-Bildschirme verstanden.

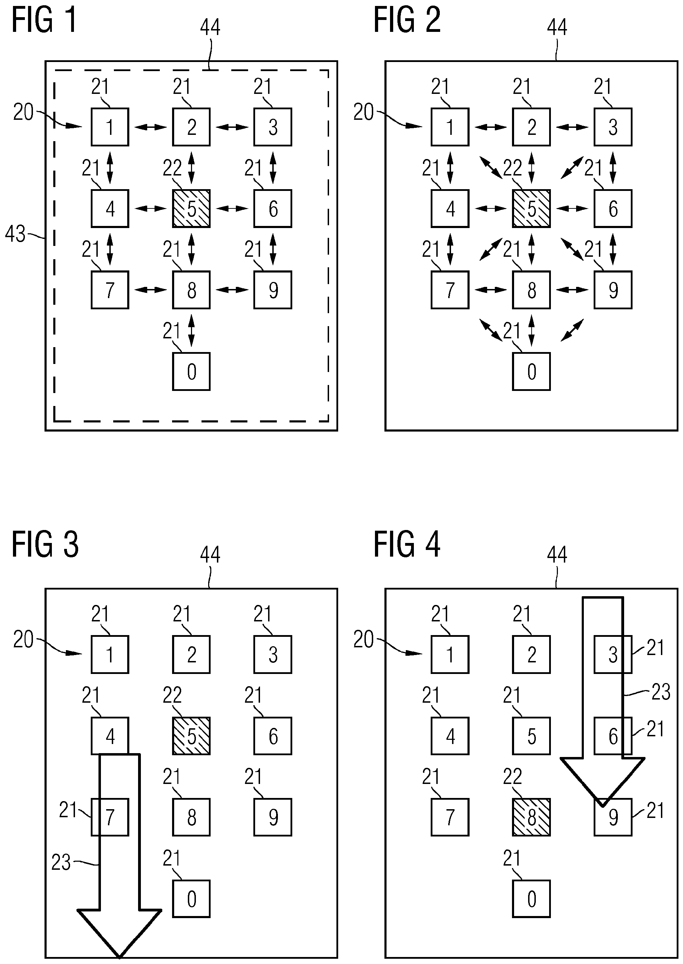

Die US 2010/0 073 329 A1 offenbart eine Benutzerschnittstelle und ein damit ausgestattetes SmartPhone, wobei die Benutzerschnittstelle ausgestattet ist mit einem Tastschirm, welcher für eine visuelle Ausgabe sowie für eine Erfassung von Berührungseingaben eingerichtet ist, mit einer Audio-Einheit, und mit mindestens einem Prozessor, welcher programmiert ist die folgenden Operationen auszuführen: Darstellung einer Anordnung virtueller Tasten auf dem Tastschirm, von denen zu jedem Zeitpunkt genau eine ausgewählt ist; Ansteuerung der Audio-Einheit zur akustischen Ausgabe einer Beschriftung oder Funktion jeder der virtuellen Tasten (21), sobald diese ausgewählt wird; Verarbeitung einer Berührungseingabe auf dem Tastschirm, welche als Wischgeste in einem beliebigen Bereich auf einer berührungsempfindlichen Oberfläche des Tastschirms ausführbar ist; und Auswahl einer virtuellen Taste, welche in Richtung der Wischgeste neben der zuvor ausgewählten virtuellen Taste angeordnet ist (siehe dort Fig. 1 und Beschreibung dazu). Die Wischgesten sind horizontale und vertikale Wischgesten, oder horizontale, vertikale und diagonale Wischgesten, wobei die virtuellen Tasten in einem rechtwinkligen Gitter angeordnet sind, so dass horizontale, vertikale oder diagonale Nachbarn der ausgewählten virtuellen Taste eindeutig bestimmt sind.

In dem Artikel "From Tapping To Touching: Making Touch Screens Accessible To Blind Users" von T. Guerreiro et al., erschienen in der Fachpublikation "IEEE Multimedia" bd. 15, Nr. 4, Okt. 2008, auf Seiten 48-50, wird auf die sogenannte "NavTouch"-Eingabemethode Bezug genommen, bei welcher Wischgesten, unabhängig davon, wo sie auf einem berührungsempfindlichen Bildschirm (Tastschirm) ausgeführt werden, zum Verschieben eines Selektionsfeldes (ausgewählte virtuelle Taste) in einer Gitteranordnung von Zeichen interpretiert werden.

Der Artikel "Blind people and mobile touch-based text entry: Acknowledging the Need for different flavours" von J. Oliveira et al., erschienen in der Fachpublikation zur Konferenz "13th international ACM SIGACCESS conference on Computers and accessibility", Dundee Schottland (UK), Okt. 2011, auf Seiten 179-186, wird ebenfalls auf die besagte "NavTouch"-Eingabe-methode Bezug genommen.

Die EP 2 717 150 A2 offenbart ein Verfahren und System für eine synchronisierte Audio-Rückmeldung (feedback) für eine nicht-sichtbare Benutzerschnittstelle.

Die WO 2002 / 19081 A2 offenbart eine auf Gesten basierende Benutzerschnittstelle.

Durch die vorliegende Erfindung soll eine Benutzerschnittstelle und ein Verfahren zur Bedienung eines Tastschirms geschaffen werden, welche eine intuitive Bedienung des Tastschirms auch für sehbehinderte oder blinde Personen erlauben.

Diese Aufgabe wird erfindungsgemäß durch eine Benutzerschnittstelle mit den Merkmalen des Anspruchs 1, und durch ein Verfahren mit den Merkmalen des Anspruchs 11 gelöst.

Weitere vorteilhafte Ausführungsformen der Erfindung sind durch die Merkmale der Unteransprüche gekennzeichnet.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungs-formen, Varianten oder Weiterbildungen erzielt werden, die in den Unteransprüchen und Ausführungsbeispielen beschrieben sind. Unter dem Begriff Zeichen werden beispielsweise Buchstaben, Ziffern und Sonderzeichen verstanden, wie sie zum Beispiel in den Zeichensätzen ASCII oder Unicode definiert sind. Andere Zeichensätze, die weder das lateinische Alphabet, noch die zehn arabischen Ziffern umfassen, können auch unter dem Begriff Zeichen verstanden werden. Weiterhin kann es sich bei den Zeichen nicht nur um darstellbare Zeichen, sondern auch um nicht-druckbare Steuerzeichen handeln. Weiterhin kann der Begriff Zeichen auch im Sinne einer Funktion einer Schaltfläche, wie etwa "OK" oder "Abbrechen" verstanden werden. In einem häufigen Anwendungsfall werden als Zeichen Ziffern eingegeben, wie sie beispielsweise in Telefonnummern und Kontonummern benutzt werden. Jede virtuelle Taste ist mit einem Zeichen belegt, welches durch sie eingebbar ist. Alternativ können den virtuellen Tasten auch Funktionen wie "Drucken" zugeordnet sein.

Die Funktionen der Benutzerschnittstelle werden durch einen oder mehrere Prozessoren bereitgestellt. In einer Variante ist ein einziger Prozessor programmiert, alle Schritte des Verfahrens durchzuführen. In einer anderen Variante ist ein erster Prozessor vorgesehen, um die Berührungseingaben zu verarbeiten, während ein zweiter Prozessor programmiert ist, um die virtuellen Tasten auszuwählen. Ein dritter Prozessor kann eine Sprachsynthese und Sprachausgabe zu den ausgewählten virtuellen Tasten veranlassen. Sämtliche der in den Ausführungsbeispielen beschriebenen Funktionen können folglich durch einen Prozessor allein, durch mehrere Prozessoren gemeinsam oder durch Arbeitsteilung unter mehreren Prozessoren bereitgestellt werden. Die Prozessoren können als Mikroprozessoren beispielsweise in Computern, Terminals oder mobilen Endgeräten eingebaut sein, sie können aber auch Teil von Mikrocontrollern sein.

Die Benutzerschnittstelle und das Verfahren eignen sich für alle Systeme, welche über eine berührungsempfindliche Oberfläche gesteuert werden. Hierzu zählen insbesondere auch Benutzerschnittstellen mit einem Multi-Touch-Bildschirm. Die einfache Gestensteuerung der Benutzerschnittstelle und des Verfahrens kann beispielsweise zur Eingabe von Telefonnummern oder Kontonummern eingesetzt werden. Sie eignet sich jedoch auch zur Texteingabe mittels einer virtuellen Tastatur im QWERTY-, QWERTZ- oder DVORAK-Layout. Das Verfahren ist insbesondere für sehbehinderte oder blinde Personen geeignet.

Die Benutzerschnittstelle und das Verfahren stellen eine Abkehr von dem gängigen Paradigma einer Benutzerführung auf Tastschirmen dar, welches den Vorteil des Tastschirms gerade darin sieht, eine Hand-Augen-Koordination zu ermöglichen, indem eine Berührung eines Nutzers genau an der Stelle auf dem Tastschirm erfolgt, an der eine entsprechende Schaltfläche visualisiert wird. Eine Wischgeste ist im Widerspruch hierzu in einem beliebigen Bereich auf der berührungsempfindlichen Oberfläche ausführbar.

Die Benutzerschnittstelle beziehungsweise das Verfahren machen sich eine Metapher zunutze, welche ein Nutzer als mentales Modell zur Steuerung verwenden kann. Entsprechend der Metapher liegt auf der ausgewählten virtuellen Taste eine Münze, welche durch die Wischgesten auf benachbarte virtuelle Tasten verschoben werden kann. Folglich ist zu jedem Zeitpunkt genau eine virtuelle Taste ausgewählt, welche beispielsweise durch eine Tippgeste in einem beliebigen Bereich auf der berührungsempfindlichen Oberfläche betätigt werden kann, wodurch das entsprechende Zeichen eingegeben wird.

Die Wischgeste wird beispielsweise über eine kurze Strecke ausgeführt. Diese Strecke kann in einer Ausführungsform mindestens 3 cm betragen. Sie kann in horizontaler und vertikaler Richtung, aber auch in diagonaler Richtung ausgeführt werden. Diagonale Wischgesten ermöglichen eine besonders schnelle Auswahl der entsprechenden virtuellen Tasten. Da auch mehrere Wischgesten hintereinander ausgeführt werden können, kann die Auswahl der virtuellen Taste beliebig oft modifiziert werden.

Gemäß einer Ausführungsform wird die Auswahl der virtuellen Taste von deren Betätigung separiert, indem zur Betätigung der ausgewählten virtuellen Taste eine eigene Berührungseingabe, hier eine Tippgeste, erforderlich ist. Dies hat den Vorteil, dass ein Nutzer die Benutzerschnittstelle zunächst explorieren kann, bevor er eine tatsächliche Zeicheneingabe oder Funktionsaktivierung durchführt.

Das Verfahren kann auf herkömmlicher, bereits vorhandener Hardware implementiert werden. Die Benutzerschnittstelle ist nach zuverlässigen und nutzerzentrierten Richtlinien konzipiert. Sie ermöglicht es, die virtuellen Tasten durch einfache Wischgesten auszuwählen.

Im Folgenden werden Ausführungsbeispiele der Erfindung anhand von Figuren näher erläutert. In den Figuren sind gleiche oder funktionsgleiche Elemente mit denselben Bezugszeichen versehen, sofern nichts anderes angegeben ist. Es zeigen:
- Figur 1: eine Benutzerschnittstelle mit einem Tastschirm 43, welcher eine berührungsempfindliche Oberfläche 44 umfasst, welche eine Auswahl virtueller Tasten 21 einer virtuellen Tastatur 20, die auf dem Tastschirm 43 dargestellt wird, mittels horizontaler und vertikaler Wischgesten ermöglicht,
- Figur 2: eine virtuelle Tastatur 20 mit virtuellen Tasten 21, welche mittels horizontaler, vertikaler und diagonaler Wischgesten auswählbar sind,
- Figur 3: eine berührungsempfindliche Oberfläche 44 eines Tastschirms, auf der eine vertikale Wischgeste 23 ausgeführt wird,
- Figur 4: eine berührungsempfindliche Oberfläche 44 eines Tastschirms, auf der eine vertikale Wischgeste 23 ausgeführt wird,
- Figur 5: eine berührungsempfindliche Oberfläche 44 eines Tastschirms, auf der eine Tippgeste 24 ausgeführt wird,
- Figur 6: eine virtuelle Tastatur 20, deren Tasten im Layout einer Telefontastatur angeordnet sind,
- Figur 7: eine virtuelle Tastatur 20, deren Tasten im Layout eines numerischen Ziffernblocks angeordnet sind,
- Figur 8: eine virtuelle Tastatur 20, deren Tasten im QWERTY-Layout angeordnet sind,
- Figur 9: virtuelle Tasten 21, welche auf einem Tastschirm angezeigt werden, auf dessen berührungsempfindlicher Oberfläche 44 eine horizontale Wischgeste 23 ausgeführt wird,
- Figur 10: eine berührungsempfindliche Oberfläche 44 eines Tastschirms, auf der eine vertikale Wischgeste ausgeführt wird,
- Figur 11: eine berührungsempfindliche Oberfläche 44 eines Tastschirms, auf der eine horizontale Wischgeste 23 ausgeführt wird,
- Figur 12: eine berührungsempfindliche Oberfläche 44 eines Tastschirms, auf der eine Tippgeste 24 ausgeführt wird, und

Figur 13 eine Systemarchitektur einer Benutzerschnittstelle.

Figur 1 zeigt eine Benutzerschnittstelle mit einem Tastschirm 43, welcher eine berührungsempfindliche Oberfläche 44 umfasst, welche eine Auswahl virtueller Tasten 21 einer virtuellen Tastatur 20, die auf dem Tastschirm 43 dargestellt wird, mittels horizontaler und vertikaler Wischgesten ermöglicht. Die virtuellen Tasten 21 sind im Layout einer Telefontastatur angeordnet. Die virtuelle Taste in der Mitte mit der Ziffer 5 ist eine vorab ausgewählte virtuelle Taste 22, die visuell hervorgehoben wird. Mittels horizontaler und vertikaler Wischgesten, welche im Folgenden noch erläutert werden, lässt sich die Auswahl von der Ziffer 5 entsprechend den in Figur 1 gezeigten Pfeilen auf jede der anderen virtuellen Tasten 21 verschieben. Nach jeder Wischgeste wird die Beschriftung der neu ausgewählten virtuellen Taste 22 per Sprachsynthese und Sprachausgabe akustisch ausgegeben. Die virtuelle Tastatur 20 wird auf dem Tastschirm 43, beispielsweise einem Multi-Touch-Bildschirm, angezeigt.

Die Berührungseingaben, darunter Wischgesten und Tippgesten, werden auf einer berührungsempfindlichen Oberfläche 44 des Tastschirms 43 ausgeführt. Bei der berührungsempfindlichen Oberfläche 44 handelt es sich um eine aktive Fläche, auf der Berührungseingaben und Gesten korrekt ausgewertet werden können. Die berührungsempfindliche Oberfläche 44 kann kleiner sein als eine sensorische Fläche des Tastschirms 43. Eine Berührungseingabe außerhalb der berührungsempfindlichen Oberfläche 44 im Randbereich der sensorischen Fläche kann zu einer akustischen oder haptischen Fehlermeldung führen. Auch in den folgenden Ausführungsbeispielen bezeichnet die berührungsempfindliche Oberfläche 44 die aktive Fläche, auf der Berührungseingaben und Gesten korrekt ausgewertet werden können, und welche nicht notwendig die komplette sensorische Fläche und/oder Anzeigefläche des Tastschirms 43 ausfüllt.

Figur 2 zeigt eine virtuelle Tastatur 20 mit virtuellen Tasten 21 entsprechend Figur 1, bei der die Auswahl der ausgewählten virtuellen Taste 22 neben den horizontalen und vertikalen Wischgesten auch mittels diagonaler Wischgesten verschoben werden kann. Diagonale Wischgesten sind auch in sämtlichen anderen Ausführungsbeispielen eine mögliche Variante.

Als Metapher für die Bedienung dient eine Münze, welche zu Beginn jeder Zifferneingabe auf der virtuellen Taste mit der Ziffer 5 zu liegen kommt, und welche mittels Wischgesten horizontal, vertikal und diagonal auf die anderen virtuellen Tasten 21 verschoben werden kann. Theoretisch wäre es möglich, die Münze mit beliebig vielen Wischgesten auf der virtuellen Tastatur 20 zu verschieben.

Mit einer einfachen Wischgeste nach rechts oder links wird die Münze ausgehend von der Ziffer 5 auf die Ziffer 6 oder Ziffer 4 geschoben. Entsprechend wird ausgehend von der Ziffer 5 mit einer Wischgeste nach oben oder unten die Ziffer 2 oder die Ziffer 8 erreicht. Durch entsprechende diagonale Wischgesten werden die Ziffern 1, 9, 3 und 7 erreicht. Somit werden alle Ziffern rund um die Ziffer 5 mit einer einzigen Wischgeste erreicht. Zur Auswahl der Ziffer 5 ist hingegen keine Wischgeste erforderlich, denn dort liegt die Münze bereits zu Anfang sowie nach jeder erfolgreichen Eingabe. Lediglich für die Ziffer 0 muss zweimal nach unten gewischt werden.

Wenn die Münze auf der gewünschten Ziffer liegt, wird die Eingabe der Ziffer durch einen Zwei-Finger-Tipp, d.h. durch ein einfaches Tippen mit zwei Fingerspitzen bestätigt. Danach liegt die Münze wieder auf der Ziffer 5 und die nächste Ziffer kann ausgewählt und bestätigt werden. Die Eingabe wird mit einem langen Zwei-Finger-Tipp abgeschlossen.

Ein Drei-Finger-Tipp startet die Eingabe von vorne, während ein langer Drei-Finger-Tipp die Eingabe abbricht. Die Wischgesten und Tippgesten können an beliebigen Stellen auf der berührungsempfindlichen Oberfläche 44 des Tastschirms 43 erfolgen. Akustische oder haptische Signale bestätigen den Erfolg der jeweiligen Geste oder signalisieren eine nicht erkannte oder fehlerhafte Geste. Zusätzlich kann die jeweils ausgewählte Ziffer per Sprachausgabe dem Nutzer mitgeteilt werden.

Ein Fehler wird beispielsweise signalisiert, wenn die Münze auf der Ziffer 6 liegt und mit einer Wischgeste nach rechts versucht wird, sie über den Rand der virtuellen Tastatur 20 hinauszuschieben. Wenn der Nutzer also eine Wischgeste ausführt, welche nicht verarbeitet werden kann, da in Richtung der Wischgeste keine weitere virtuelle Taste auf der virtuellen Tastatur zur Auswahl zur Verfügung steht, kann ein spezielles akustisches oder haptisches Signal ausgegeben werden, welches dies für den Nutzer anzeigt.

Im Ergebnis wird eine gestenbasierte Eingabe bei Systemen mit Touch-Screen bereitgestellt, beispielsweise an Geldautomaten, Selbstbedienungsterminals, Kassensystemen, Bezahlterminals, Paketautomaten, Überweisungsterminals oder Telefonen. Zur Rückmeldung können zusätzlich zu Tönen und Sprachausgabe auch Vibrationen erzeugt werden. Dieses Verfahren ist insbesondere für Blinde und Sehbehinderte geeignet. Das System kann einen Trainingsmodus für den Nutzer vorsehen. Weiterhin können durch Sprachsynthese Hinweise und Anweisungen an den Nutzer ausgegeben werden.

Im Folgenden wird auf einen konkreten Bedienablauf Bezug genommen, der in den Figuren 3 bis 5 gezeigt ist. Standardmäßig ist zu Beginn jeder Zifferneingabe als ausgewählte virtuelle Taste 22 die Taste mit der Ziffer 5 in der Mitte ausgewählt. Die ausgewählte Ziffer 5 wird per Sprachausgabe angesagt. Im in Figur 3 gezeigten Beispiel möchte der Nutzer die virtuelle Taste 21 mit der Ziffer 0 auswählen.

Unabhängig von der Darstellung der virtuellen Tastatur 20 auf dem Tastschirm 43 kann der Nutzer eine Wischgeste 23 vertikal von oben nach unten an einer beliebigen Stelle auf der berührungsempfindlichen Oberfläche 44 ansetzen, welche in keiner Weise mit dem Layout der virtuellen Tastatur 20 übereinstimmen muss.

Durch die Wischgeste 23 wird die Auswahl auf die virtuelle Taste 21 mit der Ziffer 8 verschoben, welche als ausgewählte virtuelle Taste 22 in Figur 4 eingezeichnet ist und auf dem Tastschirm visuell hervorgehoben wird. Zusätzlich wird die Ziffer 8 angesagt.

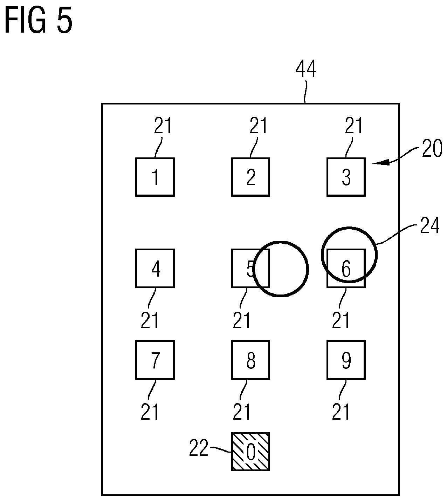

Der Nutzer führt nun eine weitere vertikale Wischgeste 23 von oben nach unten auf der berührungsempfindlichen Oberfläche 44 durch, wodurch die Ziffer 0 als ausgewählte virtuelle Taste 22 ausgewählt wird, wie dies in Figur 5 gezeigt ist. Zusätzlich wird die Ziffer 0 angesagt. Da der Nutzer die Ziffer 0 eingeben möchte, führt er nun eine Tippgeste 24 - erneut an einem beliebigen Platz auf der berührungsempfindlichen Oberfläche 44 - durch, wodurch die Eingabe der Ziffer 0 bestätigt wird.

Nach der Bestätigung der Eingabe der Ziffer 0 wird die Auswahl wieder auf die virtuelle Taste 21 mit der Ziffer 5 zurückgesetzt, welche dem Nutzer angesagt wird. Wischgesten sind folglich zur Auswahl der Ziffer 5 grundsätzlich nicht erforderlich. Sofern als nächstes diese Ziffer eingegeben werden soll, genügt es, eine Tippgeste durchzuführen, um die Auswahl der virtuellen Taste 21 mit der Ziffer 5 zu bestätigen.

Zur Auswahl der virtuellen Taste 21 mit der Ziffer 3 kann der Nutzer eine Wischgeste nach rechts und eine Wischgeste nach oben durchführen. Alternativ kann der Nutzer eine Wischgeste diagonal nach rechts oben durchführen.

Die Benutzerschnittstelle besitzt eine offene Funktionalität, welche es einer Screenreader-Software ermöglicht, die aktuell ausgewählte virtuelle Taste akustisch auszugeben.

Ein erfindungsgemäßes Ausführungsbeispiel verwendet die im Kontext der Figuren 1 bis 5 erläuterte Anordnung virtueller Tasten 21 zur Eingabe von Buchstaben analog zu Mobiltelefonen, welche eine Buchstabeneingabe über die Zifferntasten erlauben. Zu diesem Zweck sind den virtuellen Tasten 21 folgende Buchstabenfolgen zugeordnet:
2: a, b, c
3: d, e, f
4: g, h, i
5: j, k, l
6: m, n, o
7: p, q, r, s
8: t, u, v
9: w, x, y, z

In einem Texteingabemodus ist den virtuellen Tasten 21 standardmäßig jeweils der erste Buchstabe aus der Buchstabenfolge zugeordnet. Zur Eingabe dieses ersten Buchstabens wird die gewünschte virtuelle Taste 22 wie im Kontext der Figuren 1 bis 5 erläutert durch Wischgesten ausgewählt. Danach wird die Eingabe des ersten Buchstabens durch einen Zwei-Finger-Tipp bestätigt.

Zur Auswahl eines nachfolgenden Buchstabens aus der Buchstabenfolge wird die jeweilige virtuelle Taste 22 wie im Kontext der Figuren 1 bis 5 erläutert durch Wischgesten ausgewählt. Danach wechselt der Nutzer die Belegung der ausgewählten virtuellen Taste 22 durch einen Ein-Finger-Tipp, wobei der Buchstabe, welcher aktuell der ausgewählten virtuellen Taste 22 zugewiesen ist, durch den Buchstaben aus der Buchstabenfolge ersetzt wird, welcher ihm nachfolgt. Dies kann beliebig oft wiederholt werden, wobei im Anschluss an den letzten Buchstaben der Buchstabenfolge wieder der erste Buchstabe der Buchstabenfolge der ausgewählten virtuellen Taste 22 zugewiesen wird. Der jeweils zugewiesene Buchstabe wird dem Nutzer per Sprachausgabe mitgeteilt, so dass dieser beim Durchblättern der Tastenbelegung jeweils eine akustische Rückmeldung mit dem aktuellen Buchstaben erhält. Anschließend wird die Eingabe des aus der Buchstabenfolge ausgewählten Buchstabens durch einen Zwei-Finger-Tipp bestätigt.

Nach Eingabe jedes Buchstabens springt die Auswahl wie im Kontext der Figuren 1 bis 5 erläutert zurück auf die virtuelle Taste 21, welche im Zifferneingabemodus die Ziffer 5 eingeben würde.

Im vorliegenden Ausführungsbeispiel ist die Eingabe des Wortes "hallo" durch die folgenden Berührungseingaben möglich:
h: nach links, Ein-Finger-Tipp, Zwei-Finger-Tipp
a: nach oben, Zwei-Finger-Tipp
l: Ein-Finger-Tipp, Ein-Finger-Tipp, Zwei-Finger-Tipp
l: Ein-Finger-Tipp, Ein-Finger-Tipp, Zwei-Finger-Tipp
o: nach rechts, Ein-Finger-Tipp, Ein-Finger-Tipp, Zwei-Finger-Tipp

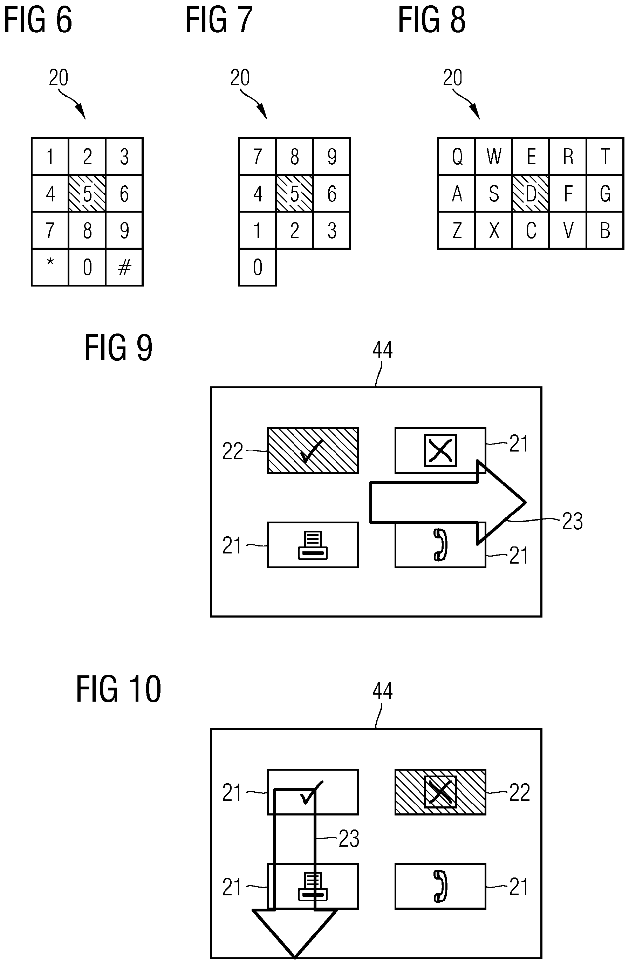

Figur 6 zeigt eine virtuelle Tastatur 20, welche zusätzlich um die beiden Sonderzeichen einer Telefontastatur erweitert ist. Eine solche virtuelle Tastatur 20 eignet sich beispielsweise zur Eingabe von Telefonnummern. Ausgehend von der standardmäßig ausgewählten virtuellen Taste mit der Ziffer 5, sind die virtuellen Tasten mit den Sonderzeichen * und # beispielsweise mittels zweier vertikaler und einer horizontalen Wischgeste (nach unten, unten, links; nach unten, unten, rechts), oder mittels einer vertikalen und einer diagonalen Wischgeste auswählbar.

Figur 7 zeigt eine virtuelle Tatstatur 20, deren Tasten entsprechend dem Layout eines numerischen Tastaturblocks angeordnet sind. Ausgehend von der standardmäßig ausgewählten virtuellen Taste 22 mit der Ziffer 5, ist die virtuelle Taste mit der Ziffer 0 beispielsweise mittels zweier vertikaler und einer horizontalen Wischgeste (nach unten, links, unten), oder mittels einer vertikalen und einer diagonalen Wischgeste auswählbar.

Figur 8 zeigt eine virtuelle Tastatur 20, deren Tasten im QWERTY-Layout angeordnet sind. Gemäß diesem Ausführungsbeispiel können Buchstaben ausgewählt und eingegeben werden. Ausgehend von der standardmäßig ausgewählten virtuellen Taste 22 mit dem Buchstaben D, sind die virtuellen Tasten mit der Belegung Q, A, Z, T, G und B beispielsweise wie folgt durch Wischgesten auswählbar:
Q: nach links, links, oben
A: nach links, links
Z: nach links, links, unten
T: nach rechts, rechts, oben
G: nach rechts, rechts
B: nach rechts, rechts, unten.

Figur 9 zeigt virtuelle Tasten 21 und eine ausgewählte virtuelle Taste 22, welche auf einem Multi-Touch-Bildschirm als Tastschirm 43 visuell ausgegeben werden. Eine solche visuelle Ausgabe von Schaltflächen kann mit der Zifferneingabe, wie sie im Kontext der Figuren 1 bis 5 beschrieben wurde, alternierend betrieben werden. Beispielsweise kann ein Nutzer zunächst eine Telefonnummer eingeben, bevor er durch eine geeignete Tippgeste zu der in Figur 9 gezeigten Bildschirmansicht gelangt. Die ausgewählte virtuelle Taste 22 mit einer Bestätigen-Funktionalität ist vorab ausgewählt und wird dem Nutzer durch eine Screenreader-Funktion vorgelesen. Durch eine Tippgeste könnte der Nutzer diese Auswahl bestätigen, wodurch beispielsweise die eingegebene Telefonnummer gewählt wird.

Die Anordnung der virtuellen Tasten 21 in Figur 9 kann nicht als virtuelle Tastatur bezeichnet werden, da es sich nur um einzelne Schaltflächen handelt. Dennoch gilt für dieses Ausführungsbeispiel der gleiche Mechanismus wie zuvor beschrieben, da auch hier klare Nachbarschaftsbeziehungen zwischen den virtuellen Tasten 21 bestehen.

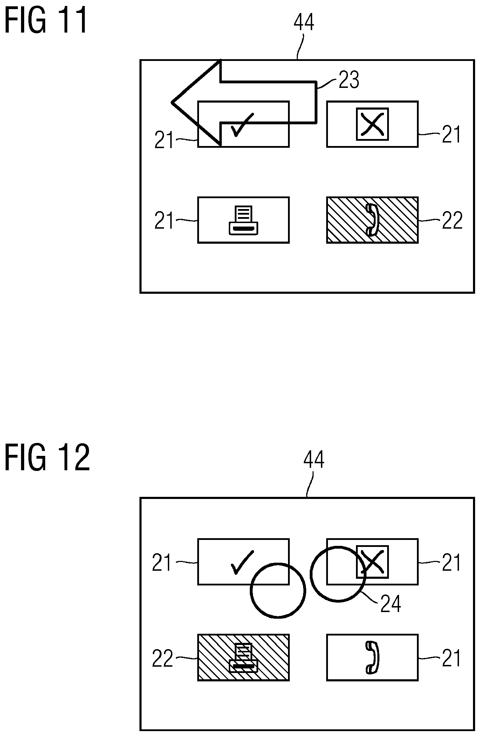

Durch eine Wischgeste 23 nach rechts verschiebt der Nutzer im gezeigten Beispiel die Auswahl auf die virtuelle Taste mit dem Abbrechen-Symbol, wie in Figur 10 gezeigt. Die nun ausgewählte Abbrechen-Funktion wird dem Nutzer durch eine Screenreader-Funktion vorgelesen. Nun führt der Nutzer eine Wischgeste 23 nach unten durch, wodurch die Auswahl auf die Taste mit dem Telefonsymbol verschoben wird. Entsprechend Figur 11 führt der Nutzer anschließend eine Wischgeste 23 nach links durch, wodurch die Auswahl auf der Taste mit dem Druckersymbol zu liegen kommt. Auf diese Weise kann der Nutzer mit einfachen Wischgesten 23 den Inhalt des Bildschirms explorieren, wobei ihm jeweils die Belegungen beziehungsweise Funktionen der Tasten beziehungsweise Schaltflächen mittels Sprachsynthese vorgelesen werden.

Da der Nutzer im gezeigten Beispiel einen Ausdruck erstellen möchte, führt er in Figur 12 eine Tippgeste 24 mit zwei Fingerspitzen auf dem Tastschirm 43 durch, wodurch die Auswahl der ausgewählten virtuellen Taste 22 mit dem Druckersymbol bestätigt wird.

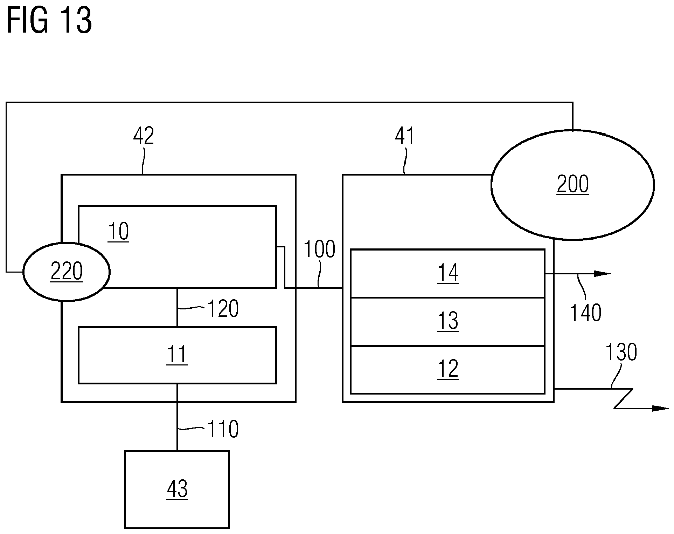

Figur 13 zeigt eine schematische Darstellung eines Ausführungsbeispiels der Benutzerschnittstelle. Der Aufbau besteht im Wesentlichen aus drei Elementen. Eine Datenverarbeitungseinheit 41 besitzt einen Mikroprozessor, einen Speicher sowie ein Betriebsprogramm 200. Darüber hinaus verfügt sie über eine Audio-Einheit 14 mit Verstärker und Lautsprecher, einen Schwingungserzeuger 13 zur Erzeugung haptischer Signale sowie eine Anzeige 12 beziehungsweise eine Graphikkarte zu deren Ansteuerung. Die Audio-Einheit 14 besitzt vorzugsweise einen Kopfhöreranschluss 140. Vorzugsweise sieht die Benutzerschnittstelle eine Einstellmöglichkeit für die Lautstärke am Kopfhöreranschluss 140 vor. Das Betriebsprogramm 200 wird von der Datenverarbeitungseinheit 41 ausgeführt. Die Datenverarbeitungseinheit 41 verfügt über eine Kommunikationsschnittstelle 130 zu weiteren Systemen.

Ein weiteres Element der Benutzerschnittstelle ist ein Sicherheitsmodul 42, welches einen zweiten Mikrokontroller 10 mit einem Speicher und einem Prozessor einerseits sowie einen ersten Mikrokontroller 11 zur Auswertung von Eingaben umfasst, welche ein Tastschirm 43 mit einer berührungsempfindlichen Oberfläche über eine erste Kommunikationsschnittstelle an den ersten Mikrokontroller 11 meldet. Das Sicherheitsmodul 42 enthält ein Steuerprogramm 220, welche auf einer Firmware gespeichert ist. Der erste Mikrokontroller 11 ist über eine zweite Kommunikationsschnittstelle 120 mit dem zweiten Mikrokontroller 10 verbunden.

Die Kommunikationsschnittstellen 100, 110 oder 120 können als serielle Schnittstelle ausgebildet sein.

Der zweite Mikrokontroller 10 ist über eine externe Kommunikationsschnittstelle 100 mit der Datenverarbeitungseinheit 41 verbunden, so dass das Betriebsprogramm 200 auf der Datenverarbeitungseinheit 41 mit dem Steuerprogramm 220 auf dem Sicherheitsmodul 42 kommunizieren kann. Der Tastschirm 43 leitet Berührungseingaben wie Tippgesten oder Wischgesten beispielsweise als (Vielzahl von) Koordinaten beziehungsweise Vektoren in einem Koordinatensystem an den ersten Mikrokontroller 11 weiter. Der Tastschirm 43 kann auch mit der Anzeige 12 zusammenfallen und als Multi-Touch-Bildschirm ausgebildet sein.

Das Betriebsprogramm 200 veranlasst Bildschirmausgaben auf der Anzeige 12 bzw. dem Tastschirm 43, akustische Signale, welche durch die Audio-Einheit 14 ausgegeben werden, sowie haptische Signale, welche durch den Schwingungserzeuger 13 erzeugt werden. Im Wesentlichen steuert das Betriebsprogramm 200 die Benutzerschnittstelle für sehende, sehbehinderte und blinde Personen, die das jeweilige System nutzen wollen. In einer möglichen Anwendung gibt ein blinder Nutzer eine Kontonummer ein, um eine Finanztransaktion durchzuführen.

Das Steuerprogramm 220 auf der Firmware des Sicherheitsmoduls 42 stellt die entsprechend benötigten Funktionen des Sicherheitsmoduls 42 über die externe Kommunikationsschnittstelle 100 für die Datenverarbeitungseinheit 41 bereit. Dazu zählen im Kontext dieses Ausführungsbeispiels die Auswertung von Berührungseingaben, welche der Nutzer auf der berührungsempfindlichen Oberfläche des Tastschirms 43 ausführt, die Interpretation dieser Berührungseingaben als Wischgesten oder Tippgesten, die Verarbeitung der Berührungseingaben zur Auswahl von Ziffern auf der virtuellen Tastatur, sowie das Senden von Notifikationen über die externe Kommunikationsschnittstelle 100 nach jeder erkannten Berührungseingabe.

Sofern der Tastschirm 43 als Multi-Touch-Bildschirm ausgebildet ist, sollte dieser zumindest Zwei-Finger-Gesten verarbeiten können. Vorzugsweise verfügt die Datenverarbeitungseinheit 41 über ein Sprachsynthesemodul, welches den Nutzer führen und unterstützen kann. Die einzelnen Berührungseingaben können durch akustische oder haptische Signale quittiert werden. Als Berührungseingaben kommen beispielsweise Tippgesten, doppelte Tippgesten, längeres Tippen und Berühren, Scrollen, Wischgesten etc. in Frage.

Die spezielle Unterstützung für Nutzer kann automatisch aktiviert werden, sobald ein Kopfhörer in den Kopfhöreranschluss 140 eingesteckt wird. Alternativ kann die Benutzerschnittstelle beispielsweise so konfiguriert werden, dass ein Berühren und Halten mit einem Finger für drei Sekunden in der oberen rechten Ecke des Bildschirms den Unterstützungsmodus für blinde oder sehbehinderte Nutzer aktiviert. Hierbei wird der Standardmodus der Benutzerschnittstelle zur Verarbeitung von Berührungseingaben und Gesten auf einen Eingabemodus mit spezieller Assistenz für blinde und sehbehinderte Menschen umgestellt, welcher spezifische Gesten unterstützt und mit akustischen Signalen quittiert, so dass blinde Nutzer die Benutzerschnittstelle komfortabel und intuitiv bedienen können. Zum Verlassen des speziellen Modus zur Unterstützung blinder Nutzer kann beispielsweise der Kopfhörer aus dem Kopfhöreranschluss 140 abgesteckt werden.

Nachdem die gewünschte virtuelle Taste ausgewählt wurde, kann die berührungsempfindliche Oberfläche des Tastschirms 43 beispielsweise mit einem Finger doppelt angetippt werden. Diese Tippgeste aktiviert die ausgewählte virtuelle Taste, wodurch die zugeordnete Ziffer eingegeben wird. Eine andere geeignete Tippgeste ist ein einfaches Tippen mit zwei Fingerspitzen, um die ausgewählte virtuelle Taste zu betätigen.

Eine weitere Geste kann dazu reserviert werden, zwischen der Ziffern-Eingabe und Schaltflächen wie in Figur 9 bis 12 hin- und her zu wechseln. Als Geste wird hierzu beispielsweise ein doppeltes Tippen mit zwei Fingerspitzen definiert. Hierdurch wird die Zifferneingabe pausiert oder beendet und der Fokus auf Schaltflächen gelegt, wie sie beispielsweise in den Figuren 9 bis 12 gezeigt sind. Derartige Schaltflächen sind beispielsweise mit den Funktionen "Alle Ziffern löschen", "Letzte Ziffer löschen", "Eingabe bestätigen" und "Zurück" belegt.

An einem Überweisungsterminal ist der durch den Tastschirm 43 dargestellte Bildschirminhalt beispielsweise in unterschiedliche Bereiche aufgeteilt: ein Feld mit dem zu zahlenden Betrag, ein Feld für die Kontonummer des Empfängers, sowie ein Bereich mit den zuvor genannten vier Schaltflächen zum Bestätigen oder Löschen der eingegebenen Ziffern.

Durch geeignete akustische Sprachsynthese-Ausgaben kann ein blinder Nutzer in Verbindung mit einer Screenreader-Funktionalität geführt werden. Beispielsweise können die folgenden Sprachsynthese-Ausgaben den Nutzer im gesamten Ablauf unterstützen:
1. Bitte geben Sie Ihre Karte ein
2. Ihre Karte konnte nicht erkannt werden, bitte versuchen Sie es erneut
3. Ihre Karte wurde erkannt, bitte tippen Sie doppelt auf den Bildschirm, um fortzufahren
4. Der Zahlbetrag ist 450,00 $, bitte tippen Sie doppelt mit einem Finger, um fortzufahren
5. Bitte geben Sie die Kontonummer des Empfängers ein
6. Bitte wischen Sie nach links, rechts, oben, unten, um die nächste virtuelle Taste auszuwählen
7. Fünf - Vier - Sieben
8. Bitte tippen Sie doppelt, um die Ziffer Sieben zu bestätigen

Sobald der Nutzer zu der in Figur 12 gezeigten Bildschirmansicht wechselt, wird ihm die Belegung beziehungsweise Funktion der ausgewählten virtuellen Taste 22 vorgelesen, beispielsweise "Bitte bestätigen Sie die Transaktion". Dies bedeutet, dass dem Nutzer nach jedem Wechsel zu diesen Kontrolltasten erneut die standardmäßig ausgewählte Taste "Transaktion bestätigen" vorgelesen wird. Als Sprachausgaben nach sukzessiver Auswahl unterschiedlicher Schaltflächen analog zu Figur 9 bis 12 eignen sich beispielhaft:
1. Bitte tippen Sie doppelt, um fortzufahren
2. Bitte tippen Sie doppelt, um abzubrechen
3. Bitte tippen Sie doppelt, um die letzte Ziffer zu löschen
4. Bitte tippen Sie doppelt, um alle Ziffern zu löschen
5. Bitte tippen Sie doppelt, um zurück ins Hauptmenü zu gelangen
6. Bitte tippen Sie doppelt, um einen Kontoauszug zu drucken Gemäß einem Ausführungsbeispiel aktiviert ein Nutzer den Unterstützungsmodus durch Einstecken eines Kopfhörers in den Kopfhöreranschluss 140. Daraufhin erhält er ausführliche Informationen über die unterstützen Gesten. Optional wird ein Demonstrations- und Übungsmodus bereitgestellt, mit dem sich der Nutzer mit der Benutzerschnittstelle vertraut machen kann.

Nachdem der Nutzer seine Karte korrekt eingeführt und den zu überweisenden Betrag eingegeben hat, wird dieser vorgelesen und mit einer Sprachausgabe "Bitte geben Sie die Kontonummer des Empfängers ein" abgeschlossen. Diese Sprachausgabe wird wiederholt, bis der Nutzer mit einem Doppel-Tipp bestätigt hat, dass er mit der Transaktion fortfahren möchte. Daraufhin wird die virtuelle Tastatur 20 aus Figur 1 bis Figur 5 aktiviert, welche es dem Nutzer erlaubt, die Kontonummer einzugeben. Eine akustische Sprachaufforderung fordert den Nutzer auf, die erste Ziffer einzugeben.

## Patentansprüche

1. Benutzerschnittstelle,
- mit einem Tastschirm (43), welcher für eine visuelle Ausgabe sowie für eine Erfassung von Berührungseingaben eingerichtet ist,
- mit einer Audio-Einheit (14), und
- mit einem Prozessor oder mehreren Prozessoren (10, 11), welche programmiert sind
- zu einer Darstellung einer Anordnung virtueller Tasten (21) auf dem Tastschirm (43), von denen zu jedem Zeitpunkt genau eine ausgewählt ist, und
- zur Ansteuerung der Audio-Einheit (14) zur akustischen Ausgabe einer Beschriftung oder Funktion jeder der virtuellen Tasten (21), sobald diese ausgewählt wird,
wobei der Prozessor oder die Prozessoren (10 , 11) programmiert sind
- zur Verarbeitung einer Berührungseingabe auf dem Tastschirm (43), welche als Wischgeste (23) in einem beliebigen Bereich auf einer berührungsempfindlichen Oberfläche (44) des Tastschirms (43) ausführbar ist, und
- zur Auswahl einer virtuellen Taste (21), welche in Richtung der Wischgeste (23) neben der zuvor ausgewählten virtuellen Taste (22) angeordnet ist,
- wobei die Wischgesten (23) horizontale und vertikale Wischgesten, oder horizontale, vertikale und diagonale Wischgesten sind, und
- wobei die virtuellen Tasten (21) in einem rechtwinkligen Gitter angeordnet sind, so dass horizontale, vertikale oder diagonale Nachbarn der ausgewählten virtuellen Taste (22) eindeutig bestimmt sind, wobei der Prozessor oder die Prozessoren (10 , 11) weiterhin programmiert sind
- zur Erkennung einer Ein-Finger-Tippgeste (24) welche in einem beliebigen Bereich auf der berührungsempfindlichen Oberfläche (44) des Tastschirms (43) ausführbar ist,
- zur Ersetzung eines Zeichens, welches der zum Zeitpunkt der Ein-Finger-Tippgeste (24) ausgewählten virtuellen Taste (22) zugewiesen ist, durch ein dem Zeichen nachfolgendes Zeichen aus einer Folge von Zeichen,
**dadurch gekennzeichnet, dass** der Prozessor oder die Prozessoren (10,11) programmiert sind
- zur Erkennung einer Zwei-Finger-Tippgeste (24), welche in einem beliebigen Bereich auf der berührungsempfindlichen Oberfläche (44) des Tastschirms (43) ausführbar ist, und
- zur Erfassung des Zeichens, welches zum Zeitpunkt der Zwei-Finger-Tippgeste (24) der ausgewählten virtuellen Taste (22) zugewiesen ist.

2. Benutzerschnittstelle nach Anspruch 1, bei der der Prozessor oder die Prozessoren (10 , 11) weiterhin programmiert sind
- zur Erkennung einer Berührungseingabe, welche als Tippgeste (24) in einem beliebigen Bereich auf der berührungsempfindlichen Oberfläche (44) des Tastschirms (43) ausführbar ist, und
- zur Erfassung eines Zeichens, welches einer zum Zeitpunkt der Tippgeste (24) ausgewählten virtuellen Taste (22) zugewiesen ist, oder
- zur Ausführung einer Funktion, welche einer zum Zeitpunkt der Tippgeste (24) ausgewählten virtuellen Taste (22) zugewiesen ist.

3. Benutzerschnittstelle nach Anspruch 2,
- mit einem Schwingungserzeuger (13) und einer Datenverarbeitungseinheit (41), welche programmiert ist,
- während oder nach der Wischgeste (23) ein erstes akustisches und/oder haptisches Signal auszugeben,
- während oder nach der Tippgeste (24) ein zweites akustisches und/oder haptisches Signal auszugeben, und
- nach einer Berührungseingabe, welche nicht erkannt wurde, ein drittes akustisches und/oder haptisches Signal auszugeben.

4. Benutzerschnittstelle nach Anspruch 3,
- bei der der Prozessor oder einer der Prozessoren (10, 11) programmiert ist, nach Erkennung einer Wischgeste (23) die zuvor ausgewählte virtuelle Taste (22) beizubehalten, sofern in der Richtung der Wischgeste (23) neben der zuvor ausgewählten virtuellen Taste (22) keine virtuelle Taste (21) angeordnet ist, und
- bei der die Datenverarbeitungseinheit (41) programmiert ist, diese Wischgeste (23) mit der Ausgabe des dritten akustischen und/oder haptischen Signals oder eines vierten akustischen und/oder haptischen Signal zu quittieren.

5. Benutzerschnittstelle nach Anspruch 2, 3 oder 4,
- bei der der Prozessor oder einer der Prozessoren (10, 11) programmiert ist, nach jeder Erfassung eines Zeichens eine fest vorgegebene Taste unter den virtuellen Tasten (21) als ausgewählte virtuelle Taste (22) auszuwählen.

6. Benutzerschnittstelle nach Anspruch 5,
- bei der die virtuellen Tasten (21) in vier Zeilen angeordnet sind, wobei
- die Ziffern 1, 2, 3 von links nach rechts drei virtuellen Tasten (21) in der obersten Zeile zugewiesen sind,
- die Ziffern 4, 5, 6 von links nach rechts drei virtuellen Tasten (21) in der zweiten Zeile zugewiesen sind,
- die Ziffern 7, 8, 9 von links nach rechts drei virtuellen Tasten (21) in der dritten Zeile zugewiesen sind, und
- die Ziffer 0 einer virtuellen Taste (21) zugewiesen ist, welche sich in der untersten Zeile in einer mittleren Position befindet, und
- bei der der Prozessor oder einer der Prozessoren (10, 11) programmiert ist, nach jeder Erfassung eines Zeichens die virtuelle Taste (21), welcher die Ziffer 5 zugewiesen ist, als ausgewählte virtuelle Taste (22) auszuwählen.

7. Benutzerschnittstelle nach Anspruch 6,
- bei der die virtuelle Taste (21), welcher die Ziffer 0 zugewiesen ist, durch zwei aufeinanderfolgende Wischgesten (23) nach unten auswählbar ist, sofern zuvor die virtuelle Taste (21) ausgewählt war, welcher die Ziffer 5 zugewiesen ist.

8. Benutzerschnittstelle nach einem der vorhergehenden Ansprüche,
- bei der der Tastschirm (43) als Berührungseingaben Berührungen mit einer oder mehreren Fingerspitzen verarbeitet und als Koordinaten oder Vektoren in einem Koordinaten-system an einen ersten Prozessor (11) übermittelt,
- bei der der erste Prozessor (11) für die Erkennung der Berührungseingaben programmiert ist, und
- bei der ein zweiter Prozessor (10) für die Auswahl der virtuellen Taste (21) programmiert ist.

9. Benutzerschnittstelle nach einem der vorhergehenden Ansprüche,
wobei der Prozessor oder die Prozessoren (10 , 11) programmiert sind
- zur Erkennung der Ein-Finger-Tippgeste (24), welche in einem beliebigen Bereich auf der berührungsempfindlichen Oberfläche (44) des Tastschirms (43) ausführbar ist,
- zur Ersetzung des Zeichens, welches der zum Zeitpunkt der Ein-Finger-Tippgeste (24) ausgewählten virtuellen Taste (22) zugewiesen ist, durch ein dem Zeichen nachfolgendes Zeichen aus einer Folge von Zeichen,
- zur Veranlassung einer Sprachausgabe des nachfolgenden Zeichens, und
- zur Wiederholung dieser drei Schritte.

10. Zugangssystem, Selbstbedienungsterminal, Kassensystem, Bezahlterminal, Geldautomat, Überweisungsterminal, Paketautomat, SmartPhone, Tablet, Laptop oder Personal Computer, welches/welcher die Benutzerschnittstelle nach einem der Ansprüche 1 bis 9 aufweist.

11. Verfahren zur Bedienung eines Systems,
bei dem ein Prozessor oder mehrere Prozessoren (10, 11)
- eine Anordnung virtueller Tasten (21), von denen zu jedem Zeitpunkt genau eine ausgewählt ist, auf einem Tastschirm (43) darstellen, und
- eine Audio-Einheit (14) zur akustischen Ausgabe einer Beschriftung oder Funktion jeder der virtuellen Tasten (21) ansteuern, sobald diese ausgewählt wird,
wobei der Prozessor oder die Prozessoren (10, 11)
- eine Berührungseingabe auf dem Tastschirm (43) verarbeiten, welche als Wischgeste (23) in einem beliebigen Bereich auf einer berührungsempfindlichen Oberfläche (44) des Tastschirms (43) ausgeführt wird, und
- eine virtuellen Taste (21) auswählen, welche in Richtung der Wischgeste (23) neben der zuvor ausgewählten virtuellen Taste (22) angeordnet ist,
- wobei die Wischgesten (23) horizontale und vertikale Wischgesten, oder horizontale, vertikale und diagonale Wischgesten sind, und
- wobei die virtuellen Tasten (21) in einem rechtwinkligen Gitter angeordnet sind, so dass horizontale, vertikale oder diagonale Nachbarn der ausgewählten virtuellen Taste (22) eindeutig bestimmt sind,
wobei der Prozessor oder die Prozessoren (10, 11)
- eine Ein-Finger-Tippgeste (24) erkennen, welche in einem beliebigen Bereich auf der berührungsempfindlichen Oberfläche (44) des Tastschirms (43) ausgeführt wird,
- ein Zeichen, welches der zum Zeitpunkt der Ein-Finger-Tippgeste (24) ausgewählten virtuellen Taste (22) zugewiesen ist, durch ein dem Zeichen nachfolgendes Zeichen aus einer Folge von Zeichen ersetzen,
**dadurch gekennzeichnet, dass** der Prozessor oder die Prozessoren (10,11)
- eine Zwei-Finger-Tippgeste (24) erkennen, welche in einem beliebigen Bereich auf der berührungsempfindlichen Oberfläche (44) des Tastschirms (43) ausgeführt wird, und
- das Zeichen erfassen, welches zum Zeitpunkt der Zwei-Finger-Tippgeste (24) der ausgewählten virtuellen Taste (22) zugewiesen ist.

12. Verfahren nach Anspruch 11, bei dem der Prozessor oder die Prozessoren (10 , 11) weiterhin
- eine Berührungseingabe erkennen, welche als Tippgeste (24) in einem beliebigen Bereich auf der berührungsempfindlichen Oberfläche (44) des Tastschirms (43) ausgeführt wird, und
- ein Zeichen erfassen, welches einer zum Zeitpunkt der Tippgeste (24) ausgewählten virtuellen Taste (22) zugewiesen ist, oder
- eine Funktion ausführen, welche einer zum Zeitpunkt der Tippgeste (24) ausgewählten virtuellen Taste (22) zugewiesen ist.

13. Verfahren nach Anspruch 12,
- bei dem eine Datenverarbeitungseinheit (41) mittels der Audio-Einheit (14) und/oder einem Schwingungserzeuger (13)
- während oder nach der Wischgeste (23) ein erstes akustisches und/oder haptisches Signal ausgibt,
- während oder nach der Tippgeste (24) ein zweites akustisches und/oder haptisches Signal ausgibt, und
- nach einer Berührungseingabe, welche nicht erkannt wurde, ein drittes akustisches und/oder haptisches Signal ausgibt.

14. Verfahren nach Anspruch 13,
- bei dem der Prozessor oder einer der Prozessoren (10, 11) nach Erkennung einer Wischgeste (23) die zuvor ausgewählte virtuelle Taste (22) beibehält, sofern in der Richtung der Wischgeste (23) neben der zuvor ausgewählten virtuellen Taste (22) keine virtuelle Taste (21) angeordnet ist, und
- bei dem die Datenverarbeitungseinheit (41) diese Wischgeste (23) mit der Ausgabe des dritten akustischen und/oder haptischen Signals oder eines vierten akustischen und/oder haptischen Signal quittiert.

15. Verfahren nach Anspruch 12, 13 oder 14,
- bei dem der Prozessor oder einer der Prozessoren (10, 11) nach jeder Erfassung eines Zeichens eine fest vorgegebene Taste unter den virtuellen Tasten (21) als ausgewählte virtuelle Taste (22) auswählt.

16. Verfahren nach Anspruch 15,
- bei dem die virtuellen Tasten (21) in vier Zeilen angeordnet sind, wobei
- die Ziffern 1, 2, 3 von links nach rechts drei virtuellen Tasten (21) in der obersten Zeile zugewiesen sind,
- die Ziffern 4, 5, 6 von links nach rechts drei virtuellen Tasten (21) in der zweiten Zeile zugewiesen sind,
- die Ziffern 7, 8, 9 von links nach rechts drei virtuellen Tasten (21) in der dritten Zeile zugewiesen sind, und
- die Ziffer 0 einer virtuellen Taste (21) zugewiesen ist, welche sich in der untersten Zeile in einer mittleren Position befindet, und
- bei dem der Prozessor oder einer der Prozessoren (10, 11) nach jeder Erfassung eines Zeichens die virtuelle Taste (21), welcher die Ziffer 5 zugewiesen ist, als ausgewählte virtuelle Taste (22) auswählt.

17. Verfahren nach Anspruch 16,
- bei dem die virtuelle Taste (21), welcher die Ziffer 0 zugewiesen ist, durch zwei aufeinanderfolgende Wischgesten (23) nach unten ausgewählt wird, sofern zuvor die virtuelle Taste (21) ausgewählt war, welcher die Ziffer 5 zugewiesen ist.

18. Verfahren nach einem der Ansprüche 11 bis 17,
- bei dem der Tastschirm (43) als Berührungseingaben Berührungen mit einer oder mehreren Fingerspitzen verarbeitet und als Koordinaten oder Vektoren in einem Koordinatensystem an einen ersten Prozessor (11) übermittelt,
- bei dem der erste Prozessor (11) die Berührungseingabe erkennt, und
- bei dem ein zweiter Prozessor (10) die virtuellen Taste (22) auswählt.

19. Verfahren nach einem der Ansprüche 11 bis 18, wobei der Prozessor oder die Prozessoren (10, 11)
- die Ein-Finger-Tippgeste (24) erkennen, welche in einem beliebigen Bereich auf der berührungsempfindlichen Oberfläche (44) des Tastschirms (43) ausgeführt wird,
- das Zeichen, welches der zum Zeitpunkt der Ein-Finger-Tippgeste (24) ausgewählten virtuellen Taste (22) zugewiesen ist, durch ein dem Zeichen nachfolgendes Zeichen aus einer Folge von Zeichen ersetzen,
- eine Sprachausgabe des nachfolgenden Zeichens veranlassen, und
- diese drei Schritte wiederholen.

20. Computerlesbarer Datenträger,
- auf dem ein Computerprogramm gespeichert ist, welches das Verfahren nach einem der Ansprüche 11 bis 19 ausführt, wenn es in einem Prozessor oder mehreren Prozessoren in einer Benutzerschnittstelle nach einem der Ansprüche 1-10 abgearbeitet wird.

21. Computerprogramm,
- welches in einem Prozessor oder mehreren Prozessoren in einer Benutzerschnittstelle nach einem der Ansprüche 1-10 abgearbeitet wird und dabei das Verfahren nach einem der Ansprüche 11 bis 19 ausführt.

## Claims

1. User interface,
- having a touchscreen (43) that is set up for visual output and for capturing touch inputs,
- having an audio unit (14), and
- having a processor or multiple processors (10, 11) that are programmed
- to present an arrangement of virtual keys (21) on the touchscreen (43), precisely one of which is selected at any time, and
- to actuate the audio unit (14) to audibly output a label or function of each of the virtual keys (21) as soon as said virtual key is selected,
wherein the processor or the processors (10, 11) are programmed
- to process a touch input on the touchscreen (43) that can be performed as a swipe gesture (23) in any region on a touch-sensitive surface (44) of the touchscreen (43), and
- to select a virtual key (21) that is arranged next to the previously selected virtual key (22) in the direction of the swipe gesture (23),
- wherein the swipe gestures (23) are horizontal and vertical swipe gestures, or horizontal, vertical and diagonal swipe gestures, and
- wherein the virtual keys (21) are arranged in a rectangular grid, so that horizontal, vertical or diagonal neighbors of the selected virtual key (22) are explicitly determined,
wherein the processor or the processors (10, 11) are furthermore programmed
- to detect a one-finger tap gesture (24) that can be performed in any region on the touch-sensitive surface (44) of the touchscreen (43),
- to replace a character that is assigned to the virtual key (22) selected at the time of the one-finger tap gesture (24) with a character that succeeds the character in a sequence of characters,
**characterized in that** the processor or the processors (10, 11) are programmed
- to detect a two-finger tap gesture (24) that can be performed in any region on the touch-sensitive surface (44) of the touchscreen (43), and
- to capture the character that is assigned to the selected virtual key (22) at the time of the two-finger tap gesture (24).

2. User interface according to Claim 1,
in which the processor or the processors (10, 11) are furthermore programmed
- to detect a touch input that can be performed as a tap gesture (24) in any region on the touch-sensitive surface (44) of the touchscreen (43), and
- to capture a character that is assigned to a virtual key (22) selected at the time of the tap gesture (24), or
- to perform a function that is assigned to a virtual key (22) at the time of the tap gesture (24) .

3. User interface according to Claim 2,
- having a vibration generator (13) and a data processing unit (41), which is programmed
- to output a first audible and/or haptic signal during or after the swipe gesture (23),
- to output a second audible and/or haptic signal during or after the tap gesture (24), and
- to output a third audible and/or haptic signal after a touch input that has not been detected.

4. User interface according to Claim 3,
- in which the processor or one of the processors (10, 11) is programmed to follow detection of a swipe gesture (23) by retaining the previously selected virtual key (22), provided that there is no virtual key (21) arranged next to the previously selected virtual key (22) in the direction of the swipe gesture (23), and
- in which the data processing unit (41) is programmed to acknowledge this swipe gesture (23) by outputting the third audible and/or haptic signal or a fourth audible and/or haptic signal.

5. User interface according to Claim 2, 3 or 4,
- in which the processor or one of the processors (10, 11) is programmed to follow any capture of a character by selecting a firmly prescribed key among the virtual keys (21) as the selected virtual key (22).

6. User interface according to Claim 5,
- in which the virtual keys (21) are arranged in four rows, wherein
- the digits 1, 2, 3 are assigned to three virtual keys (21) from left to right in the topmost row,
- the digits 4, 5, 6 are assigned to three virtual keys (21) from left to right in the second row,
- the digits 7, 8, 9 are assigned to three virtual keys (21) from left to right in the third row, and
- the digit 0 is assigned to a virtual key (21) that is in the bottommost row in a central position, and
- in which the processor or one of the processors (10, 11) is programmed to follow any capture of a character by selecting the virtual key (21) to which the digit 5 is assigned as the selected virtual key (22).

7. User interface according to Claim 6,
- in which the virtual key (21) to which the digit 0 is assigned is selectable by two successive swipe gestures (23) downward, provided that the virtual key (21) to which the digit 5 is assigned was previously selected.

8. User interface according to one of the preceding claims,
- in which the touchscreen (43) processes touches with one or more fingertips as touch inputs and transmits them to a first processor (11) as coordinates or vectors in a coordinate system,
- in which the first processor (11) is programmed to detect the touch inputs, and
- in which a second processor (10) is programmed to select the virtual key (21).

9. User interface according to one of the preceding claims,
wherein the processor or processors (10, 11) are programmed
- to detect the one-finger tap gesture (24) that can be performed in any region on the touch-sensitive surface (44) of the touchscreen (43),
- to replace the character that is assigned to the virtual key (22) selected at the time of the one-finger tap gesture (24) with a character that succeeds the character in a sequence of characters,
- to prompt voice output of the succeeding character, and
- to repeat these three steps.

10. Access system, self-service terminal, checkout system, payment terminal, automated teller machine, credit transfer terminal, parcel machine, smartphone, tablet, laptop or personal computer that has the user interface according to one of Claims 1 to 9.

11. Method for operating a system,
in which a processor or multiple processors (10, 11)
- present an arrangement of virtual keys (21), precisely one of which is selected at any time, on a touchscreen (43), and
- actuate an audio unit (14) to audibly output a label or function of each of the virtual keys (21) as soon as said virtual key is selected, wherein the processor or the processors (10, 11)
- process a touch input on the touchscreen (43) that is performed as a swipe gesture (23) in any region on a touch-sensitive surface (44) of the touchscreen (43), and
- select a virtual key (21) that is arranged next to the previously selected virtual key (22) in the direction of the swipe gesture (23),
- wherein the swipe gestures (23) are horizontal and vertical swipe gestures, or horizontal, vertical and diagonal swipe gestures, and
- wherein the virtual keys (21) are arranged in a rectangular grid, so that horizontal, vertical or diagonal neighbors of the selected virtual key (22) are explicitly determined,
wherein the processor or the processors (10, 11)
- detect a one-finger tap gesture (24) that is performed in any region on the touch-sensitive surface (44) of the touchscreen (43),
- replace a character that is assigned to the virtual key (22) selected at the time of the one-finger tap gesture (24) with a character that succeeds the character in a sequence of characters,
**characterized in that** the processor or processors (10, 11)
- detect a two-finger tap gesture (24) that is performed in any region on the touch-sensitive surface (44) of the touchscreen (43), and
- capture the character that is assigned to the selected virtual key (22) at the time of the two-finger tap gesture (24).

12. Method according to Claim 11,
in which the processor or the processors (10, 11) furthermore
- detect a touch input that is performed as a tap gesture (24) in any region on the touch-sensitive surface (44) of the touchscreen (43), and
- capture a character that is assigned to a virtual key (22) selected at the time of the tap gesture (24), or
- perform a function that is assigned to a virtual key (22) selected at the time of the tap gesture (24) .

13. Method according to Claim 12,
- in which a data processing unit (41) uses the audio unit (14) and/or a vibration generator (13)
- to output a first audible and/or haptic signal during or after the swipe gesture (23),
- to output a second audible and/or haptic signal during or after the tap gesture (24), and
- to output a third audible and/or haptic signal after a touch input that has not been detected.

14. Method according to Claim 13,
- in which the processor or one of the processors (10, 11) follows detection of a swipe gesture (23) by retaining the previously selected virtual key (22), provided that there is no virtual key (21) arranged next to the previously selected virtual key (22) in the direction of the swipe gesture (23), and
- in which the data processing unit (41) acknowledges this swipe gesture (23) by outputting the third audible and/or haptic signal or a fourth audible and/or haptic signal.

15. Method according to Claim 12, 13 or 14,
- in which the processor or one of the processors (10, 11) follows any capture of a character by selecting a firmly prescribed key among the virtual keys (21) as the selected virtual key (22) .

16. Method according to Claim 15,
- in which the virtual keys (21) are arranged in four rows, wherein
- the digits 1, 2, 3 are assigned to three virtual keys (21) from left to right in the topmost row,
- the digits 4, 5, 6 are assigned to three virtual keys (21) from left to right in the second row,
- the digits 7, 8, 9 are assigned to three virtual keys (21) from left to right in the third row, and
- the digit 0 is assigned to a virtual key (21) that is in the bottommost row in a central position, and
- in which the processor or one of the processors (10, 11) follows any capture of a character by selecting the virtual key (21) to which the digit 5 is assigned as the selected virtual key (22) .

17. Method according to Claim 16,
- in which the virtual key (21) to which the digit 0 is assigned is selected by two successive swipe gestures (23) downward, provided that the virtual key (21) to which the digit 5 is assigned was previously selected.

18. Method according to one of Claims 11 to 17,
- in which the touchscreen (43) processes touches with one or more fingertips as touch inputs and transmits them to a first processor (11) as coordinates or vectors in a coordinate system,
- in which the first processor (11) detects the touch input, and
- in which a second processor (10) selects the virtual key (22).

19. Method according to one of Claims 11 to 18,
wherein the processor or processors (10, 11) are programmed
- to detect the one-finger tap gesture (24) that is performed in any region on the touch-sensitive surface (44) of the touchscreen (43),
- to replace the character that is assigned to the virtual key (22) selected at the time of the one-finger tap gesture (24) with a character that succeeds the character in a sequence of characters,
- to prompt voice output of the succeeding character, and
- to repeat these three steps.

20. Computer-readable data storage medium
- that stores a computer program that performs the method according to one of Claims 11 to 19 when it is executed in a processor or multiple processors in a user interface according to one of Claims 1-10.

21. Computer program
- that is executed in a processor or multiple processors in a user interface according to one of Claims 1-10 and in so being performs the method according to one of Claims 11 to 19.

## Revendications

1. Interface utilisateur,
- comportant un écran tactile (43) qui est conçu pour effectuer une sortie visuelle ainsi que pour la détection d'entrées tactiles,
- comportant une unité audio (14), et
- comportant un ou plusieurs processeurs (10, 11) qui sont programmés
- pour effectuer une représentation d'un agencement de touches virtuelles (21) sur l'écran tactile (43), dont exactement une est sélectionnée à chaque instant, et
- pour commander l'unité audio (14) afin de fournir en sortie acoustiquement un étiquetage ou une fonction de chacune desdites touches virtuelles (21) dès que celle-ci est sélectionnée,
dans laquelle le ou les processeurs (10, 11) sont programmés
- pour traiter une entrée tactile sur l'écran tactile (43), qui peut être exécutée sous la forme d'un geste de glissement (23) dans une zone quelconque sur une surface tactile (44) de l'écran tactile (43), et
- pour sélectionner une touche virtuelle (21) disposée dans la direction du geste de glissement (23) à côté de la touche virtuelle précédemment sélectionnée (22),
- dans laquelle les gestes de glissement (23) sont des gestes de glissement horizontaux et verticaux, ou des gestes de glissement horizontaux, verticaux et diagonaux, et
- dans laquelle les touches virtuelles (21) sont disposées dans une grille rectangulaire de manière à ce que des voisins horizontaux, verticaux ou diagonaux de la touche virtuelle (22) sélectionnée soient déterminés de manière unique,
dans laquelle le ou les processeurs (10, 11) sont en outre programmés
- pour reconnaître un geste à un doigt (24) qui peut être exécuté dans une zone quelconque sur la surface tactile (44) de l'écran tactile (43),
- pour remplacer un symbole affecté à la touche virtuelle (22) sélectionnée à l'instant du geste à un doigt (24) par un symbole consécutif audit symbole dans une séquence de symboles,
**caractérisé en ce que** le ou les processeurs (10, 11) sont programmés
- pour reconnaître un geste à deux doigts (24) qui peut être exécuté dans une zone quelconque sur la surface tactile (44) de l'écran tactile (43), et
- pour détecter le symbole affecté à la touche virtuelle (22) sélectionnée à l'instant du geste à deux doigts (24) .

2. Interface utilisateur selon la revendication 1, dans laquelle le ou les processeurs (10, 11) sont en outre programmés
- pour reconnaître une entrée tactile qui peut être exécutée sous la forme d'un geste tactile (24) dans une zone quelconque sur la surface tactile (44) de l'écran tactile (43), et
- pour détecter un symbole affecté à une touche virtuelle (22) sélectionnée à l'instant du geste du doigt (24), ou
- pour exécuter une fonction affectée à une touche virtuelle (22) sélectionnée à l'instant du geste du doigt (24) .

3. Interface utilisateur selon la revendication 2,
- comportant un générateur de vibrations (13) et une unité de traitement de données (41) qui est programmée
- pour fournir en sortie un premier signal acoustique et/ou haptique pendant ou après le geste de glissement (23),
- pour fournir en sortie un deuxième signal acoustique et/ou haptique pendant ou après le geste du doigt (24), et
- pour fournir en sortie un troisième signal acoustique et/ou haptique après une entrée tactile n'ayant pas été reconnue.

4. Interface utilisateur selon la revendication 3,
- dans laquelle le processeur ou l'un des processeurs (10, 11) est programmé pour conserver la touche virtuelle précédemment sélectionnée (22) après la reconnaissance d'un geste de glissement (23), si aucune touche virtuelle (21) n'est disposée à côté de la touche virtuelle précédemment sélectionnée (22) dans la direction du geste de glissement (23), et
- dans laquelle l'unité de traitement de données (41) est programmée pour accuser réception dudit geste de glissement (23) par la fourniture en sortie du troisième signal acoustique et/ou haptique ou d'un quatrième signal acoustique et/ou haptique.

5. Interface utilisateur selon la revendication 2, 3 ou 4,
- dans laquelle le processeur ou l'un des processeurs (10, 11) est programmé pour sélectionner une touche prédéterminée fixe parmi les touches virtuelles (21) en tant que touche virtuelle (22) sélectionnée après chaque détection d'un symbole.

6. Interface utilisateur selon la revendication 5,
- dans laquelle les touches virtuelles (21) sont disposées en quatre lignes, dans laquelle
- les chiffres 1, 2, 3 sont affectés de gauche à droite à trois touches virtuelles (21) sur la ligne supérieure,
- les chiffres 4, 5, 6 sont affectés de gauche à droite à trois touches virtuelles (21) sur la deuxième ligne,
- les chiffres 7, 8, 9 sont affectés de gauche à droite à trois touches virtuelles (21) sur la troisième ligne, et
- le chiffre 0 est affecté à une touche virtuelle (21) située sur la ligne la plus basse dans une position médiane, et
- dans laquelle le processeur ou l'un des processeurs (10, 11) est programmé pour sélectionner, après chaque détection d'un symbole, la touche virtuelle (21) à laquelle est affecté le chiffre 5, en tant que touche virtuelle (22) sélectionnée.

7. Interface utilisateur selon la revendication 6,
- dans laquelle la touche virtuelle (21) à laquelle est affecté le chiffre 0 peut être sélectionnée par deux gestes de glissement successifs (23) vers le bas si la touche virtuelle (21) à laquelle est affecté le chiffre 5 a été précédemment sélectionnée.

8. Interface utilisateur selon l'une des revendications précédentes,
- dans laquelle l'écran tactile (43) traite en tant qu'entrées tactiles, des contacts tactiles avec un ou plusieurs doigts et les transmet sous forme de coordonnées ou de vecteurs dans un système de coordonnées à un premier processeur (11),
- dans laquelle le premier processeur (11) est programmé pour reconnaître les entrées tactiles, et
- dans laquelle un deuxième processeur (10) est programmé pour sélectionner la touche virtuelle (21).

9. Interface utilisateur selon l'une des revendications précédentes,
dans laquelle le ou les processeurs (10, 11) sont programmés
- pour reconnaître le geste d'un doigt (24) qui peut être exécuté dans une zone quelconque sur la surface tactile (44) de l'écran tactile (43),
- pour remplacer le symbole affecté à la touche virtuelle (22) sélectionnée à l'instant du geste à un doigt (24) par un symbole consécutif audit symbole dans une séquence de symboles,
- pour déclencher une sortie vocale du symbole suivant,
et
- pour répéter lesdites trois étapes.

10. Système d'accès, terminal en libre-service, système de caisse enregistreuse, terminal de paiement, distributeur automatique de billets, terminal de remise, automate pour colis, téléphone intelligent, tablette, ordinateur portable ou personnel comportant l'interface utilisateur selon l'une des revendications 1 à 9.

11. Procédé pour le fonctionnement d'un système, dans lequel un ou plusieurs processeurs (10, 11)
- représentent un agencement de touches virtuelles (21), dont exactement une est sélectionnée à chaque instant, sur un écran tactile (43), et
- une unité audio (14) pour fournir en sortie acoustiquement un étiquetage ou une fonction de chacune desdites touches virtuelles (21) dès que celle-ci est sélectionnée,
dans lequel le ou les processeurs (10, 11)
- traitent une entrée tactile sur l'écran tactile (43) qui est exécutée sous la forme d'un geste de glissement (23) dans une zone quelconque sur une surface tactile (44) de l'écran tactile (43), et
- sélectionnent une touche virtuelle (21) disposée dans la direction du geste de glissement (23) à côté de la touche virtuelle précédemment sélectionnée (22),
- dans lequel les gestes de glissement (23) sont des gestes de glissement horizontaux et verticaux, ou des gestes de glissement horizontaux, verticaux et diagonaux, et
- dans lequel les touches virtuelles (21) sont disposées dans une grille rectangulaire de manière à ce que des voisins horizontaux, verticaux ou diagonaux de la touche virtuelle (22) sélectionnée soient déterminés de manière unique,
dans lequel le ou les processeurs (10, 11)
- reconnaissent un geste à un doigt (24) qui est exécuté dans une zone quelconque de la surface tactile (44) de l'écran tactile (43),
- remplacent un symbole affecté à la touche virtuelle (22) sélectionnée à l'instant du geste à un doigt (24) par un symbole consécutif audit symbole dans une séquence de symboles,
**caractérisé en ce que** le ou les processeurs (10, 11) sont
- un geste à deux doigts (24) qui est qui est exécuté dans une zone quelconque de la surface tactile (44) de l'écran tactile (43), et
- détecter le symbole affecté à la touche virtuelle (22) sélectionnée à l'instant du geste à deux doigts (24).

12. Procédé selon la revendication 11,
dans lequel le ou les transformateurs (10, 11)
- reconnaissent une entrée tactile qui est exécutée sous la forme d'un geste tactile (24) dans une zone quelconque de la surface tactile (44) de l'écran tactile (43), et
- détectent un symbole affecté à une touche virtuelle (22) sélectionnée à l'instant du geste du doigt (24), ou
- exécutent une fonction affectée à une touche virtuelle (22) sélectionnée à l'instant du geste du doigt (24).

13. Procédé selon la revendication 12,
- dans lequel une unité de traitement de données (41), au moyen de l'unité audio (14) et/ou d'un générateur de vibrations (13),
- fournit en sortie un premier signal acoustique et/ou haptique pendant ou après le geste de glissement (23),
- fournit en sortie un deuxième signal acoustique et/ou haptique pendant ou après le geste du doigt (24), et
- fournit en sortie un troisième signal acoustique et/ou haptique après une entrée tactile n'ayant pas été reconnue.

14. Procédé selon la revendication 13,
- dans lequel le processeur ou l'un des processeurs (10, 11) conserve la touche virtuelle précédemment sélectionnée (22) après la reconnaissance d'un geste de glissement (23), si aucune touche virtuelle (21) n'est disposée à côté de la touche virtuelle précédemment sélectionnée (22) dans la direction du geste de glissement (23), et
- dans lequel l'unité de traitement de données (41) accuse réception dudit geste de glissement (23) par la fourniture en sortie du troisième signal acoustique et/ou haptique ou d'un quatrième signal acoustique et/ou haptique.

15. Procédé selon la revendication 12, 13 ou 14,
- dans lequel le processeur ou l'un des processeurs (10, 11) sélectionne une touche prédéterminée fixe parmi les touches virtuelles (21) en tant que touche virtuelle (22) sélectionnée après chaque détection d'un symbole.

16. Procédé selon la revendication 15,
- dans lequel les touches virtuelles (21) sont disposées en quatre lignes, dans lequel
- les chiffres 1, 2, 3 sont affectés de gauche à droite à trois touches virtuelles (21) sur la ligne supérieure,
- les chiffres 4, 5, 6 sont affectés de gauche à droite à trois touches virtuelles (21) sur la deuxième ligne,
- les chiffres 7, 8, 9 sont affectés de gauche à droite à trois touches virtuelles (21) sur la troisième ligne, et
- le chiffre 0 à est affecté une touche virtuelle (21) située sur la ligne la plus basse dans une position médiane, et
- dans lequel le processeur ou l'un des processeurs (10, 11) sélectionne, après chaque détection d'un symbole, la touche virtuelle (21) à laquelle est affecté le chiffre 5, en tant que touche virtuelle (22) sélectionnée.

17. Procédé selon la revendication 16,
- dans lequel la touche virtuelle (21) à laquelle est affecté le chiffre 0 est sélectionnée par deux gestes de glissement successifs (23) vers le bas si la touche virtuelle (21) à laquelle est affecté le chiffre 5 a été précédemment sélectionnée.

18. Procédé selon l'une des revendications 11 à 17,
- dans lequel l'écran tactile (43) traite en tant qu'entrées tactiles, des contacts tactiles avec un ou plusieurs doigts et les transmet sous forme de coordonnées ou de vecteurs dans un système de coordonnées à un premier processeur (11),
- dans lequel le premier processeur (11) reconnaît l'entrée tactile, et
- dans lequel un deuxième processeur (10) sélectionne la touche virtuelle (22).

19. Procédé selon l'une des revendications 11 à 18, dans lequel le ou les processeurs (10, 11)
- reconnaissent le geste d'un doigt (24) qui est exécuté dans une zone quelconque de la surface tactile (44) de l'écran tactile (43),
- remplacent le symbole affecté à la touche virtuelle (22) sélectionnée à l'instant du geste à un doigt (24) par un symbole consécutif audit symbole dans une séquence de symboles,
- déclenchent une sortie vocale du symbole suivant, et
- répètent lesdites trois étapes.

20. Support de données lisible par ordinateur,
- sur lequel est stocké un programme informatique qui met en oeuvre le procédé selon l'une des revendications 11 à 19 lorsqu'il est traité sur un ou plusieurs processeurs dans une interface utilisateur selon l'une des revendications 1-10.

21. Programme informatique,
- qui est traité sur un ou plusieurs processeurs dans une interface utilisateur selon l'une des revendications 1-10 et met ainsi en oeuvre le procédé selon l'une des revendications 11 à 19.
